# EUROPÄISCHE PATENTSCHRIFT

(11) **EP 1 065 329 B1**
(45) Veröffentlichungstag und Bekanntmachung des Hinweises auf die Patenterteilung: **11.05.2005**
(21) Anmeldenummer: 00810579.3
(22) Anmeldetag: 03.07.2000
(51) Int. Cl.: E04B 9/32, E04C 2/54, E04C 2/40, B32B 17/10, C03C 27/12

(54) **Abdeckelement für eine untergehängte Decke**
Covering element for suspended ceilings
Elément de revêtement pour faux plafonds

(30) Priorität: 02.07.1999 EP 99810581
(43) Veröffentlichungstag der Anmeldung: 03.01.2001
(73) Patentinhaber: Glas Trösch Holding AG, 3011 Bern (CH)
(72) Erfinder: Gilgen, René, 3176 Neuenegg (CH); Hess, Rudolf, 8142 Uitikon (CH)
(74) Vertreter: Roshardt, Werner Alfred, Dipl.-Phys.

(56) Entgegenhaltungen:
- DE-C- 19 705 252
- DE-U- 7 225 428
- US-A- 2 202 690
- US-A- 2 374 056
- US-A- 2 679 467

## Beschreibung

### Technisches Gebiet

Die vorliegende Erfindung betrifft ein für eine untergehängte Decke geeignetes Abdeckelement nach dem Oberbegriff des Anspruchs 1.

### Stand der Technik

Zum Abdecken oder Verkleiden von Gebäudeteilen wie Decken, Aussen- oder Innenwänden usw. ist eine Vielzahl von verschiedenen Abdeckelementen bekannt, welche häufig eine Abdeck- bzw. Verkleidungsplatte aus Glas als eigentliches Verkleidungs- oder Abdeckteil umfassen. So ist es z.B. zum Abdecken der Unterseite einer tragenden Decken- oder Dachkonstruktion bekannt, Abdeckplatten an der Decken- oder Dachkonstruktion aufzuhängen und so eine untergehängte Decke zu schaffen. Untergehängte Decken mit Abdeckplatten (auch Deckenplatten genannt) aus einem durchscheinenden Material werden auch als untergehängte Lichtdecken bezeichnet. Üblicherweise sind Leuchten zwischen einer die untergehängte Lichtdecke tragenden Halte- oder Tragkonstruktion (z.B. der tragenden Decken- oder Dachkonstruktion) und der Lichtdecke angeordnet, um den durch die Lichtdecke nach oben abgeschlossenen Raum zu beleuchten. Die Deckenplatten von untergehängten Lichtdecken sind meistens aus Glas gefertigt, wobei aus Sicherheits- und Festigkeitsgründen Verbundsicherheitsglas bevorzugt wird.

Zur Befestigung der Deckenplatten aus Glas an der die Lichtdecke tragenden Halte- oder Tragkonstruktion können die Glaskanten der Deckenplatten mit Metallprofilen eingefasst und mittels der Metallprofile an der Tragkonstruktion befestigt sein. Es ist auch bekannt, Aufhängebeschläge von oben durch die zwischen zwei benachbarten Deckenplatten gebildeten Fugen hindurch zu führen und die Glasunterseite der Deckenplatten auf Auflageflächen aufzulegen, die an den Aufhängebeschlägen angeformt sind. Weiter sind Befestigungssysteme mit Punkthalterungen bekannt, bei denen Aufhängebeschläge durch Bohrungen in den Deckenplatten aus Glas hindurch geführt oder mit in den Glasplatten integrierten Befestigungsbeschlägen verbunden sind.

Sämtliche bisher bekannten Befestigungssysteme zum Aufhängen von untergehängten Lichtdecken an den die Lichtdecken tragenden Halte- oder Tragkonstruktionen weisen den Nachteil auf, dass wenigstens ein Teil der Aufhängebeschläge von der Rauminnenseite des mit der Lichtdecke nach oben abgeschlossenen Raumes her sichtbar sind. Entweder sind diese Aufhängebeschläge direkt sichtbar, wenn sie unterhalb der Glasunterseiten der Deckenplatten angeordnet sind, oder sie sind indirekt als Schatten oder Diskontinuitäten der Helligkeit an den Glasunterseiten der durchscheinenden Deckenplatten erkennbar, wenn sie zwischen den Deckenplatten und den über den Deckenplatten angeordneten Leuchten angeordnet sind.

Die durch die Aufhängebeschläge verursachten Helligkeitsunterschiede an der Unterseite einer untergehängten Lichtdecke können aus rein ästhetischen Gründen unerwünscht sein. Die Helligkeitsunterschiede können jedoch auch zu einer unregelmässigen Beleuchtung von Objekten führen, die in dem mit der Lichtdecke versehenen Raum angeordnet sind, was insbesondere im Falle von Museen oder anderen Ausstellungsräumen als Nachteil empfunden wird.

### Darstellung der Erfindung

Aufgabe der Erfindung ist die Angabe eines für eine untergehängte Decke verwendbaren Abdeckelementes, welches die Schaffung einer untergehängten Lichtdecke mit bloss geringfügigen Helligkeitsunterschieden an der Unterseite der Lichtdecke ermöglicht.

Die Lösung der Aufgabe ist durch die Merkmale des Anspruchs 1 definiert. Gemäss der Erfindung weist ein Abdeckelement für eine untergehängte Decke eine Abdeckplatte auf, die zwei durch eine Verbundglasfolie zu einem Verbundglas verbundene Glasscheiben umfasst. Das erfindungsgemässe Abdeckelement zeichnet sich dadurch aus, dass die Verbundglasfolie eine über einen Rand einer der Glasscheiben vorstehende Partie aufweist, die derart bemessen ist, dass sie zum Aufhängen der Abdeckplatte an einer Haltevorrichtung geeignet ist.

Als Glasscheibe wird im Zuge der vorliegenden Beschreibung und der Ansprüche stets ein Einscheibenglas bezeichnet, das von einem Verbundglas (auch Mehrscheibenglas genannt) zu unterscheiden ist. Unter einer Haltevorrichtung ist irgend eine Vorrichtung zum Halten oder Tragen der Abdeckplatte zu verstehen. Eine Haltevorrichtung kann z.B. eine tragende Decke oder eine Dachkonstruktion sein, die mit Aufhängeelementen bzw. Haltern versehen ist, an welche die Abdeckplatten aufgehängt werden können. Eine Haltevorrichtung kann jedoch eine speziell zum Halten der Abdeckplatten vorgesehene, selbsttragende Baukonstruktion sein.

Die Dicke der Verbundglasfolie und die Breite der vorstehenden Folienpartie sind in Abhängigkeit der spezifischen Zugfestigkeit der Verbundglasfolie und des Gewichts der Abdeckplatte derart bemessen, dass die vorstehende Folienpartie zum Aufhängen der Abdeckplatte an einer Haltevorrichtung geeignet ist. Somit hat dieVerbundglasfolie bei einem erfindungsgemässen Abdeckelement zwei Funktionen: einerseits hält sie (auf für Verbundgläser übliche Art) die mittels der Folie zu einem Verbundglas zusammenlaminierten beiden Glasscheiben der Abdeckplatte zusammen, und andrerseits dient eine über einen Rand einer der Glasscheiben vorstehende Partie der Verbundglasfolie zum Aufhängen der Abdeckplatte an einer Haltevorrichtung, um die Abdeckplatte an der Haltevorrichtung zu halten bzw. zu befestigen.

Aufgrund der zusätzlichen Aufhängefunktion der Verbundglasfolie kann bei einer entsprechenden Bemessung der Verbundglasfolie auf weitere Verbindungs- oder Halteelemente, welche direkt mit der Abdeckplatte verbunden sind, verzichtet werden. Die Abdeckplatte wird lediglich durch die durchsichtige Verbundglasfolie gehalten. Dadurch müssen bei einer untergehängten Lichtdecke mit erfindungsgemässen Abdeckelementen die Abdeck- bzw. Deckenplatten weder mit Metallprofilen eingefasst, mit Bohrungen für die Durchführung von Aufhängebeschlägen oder mit in die Deckenplatten integrierten Befestigungsbeschlägen versehen werden. Vom Rauminnem eines mit einer Lichtdecke aus erfindungsgemässen Abdeckelementen ausgerüsteten Raumes aus sind weder Aufhängebeschläge selbst noch deren Schatten erkennbar. Die Glasscheiben an den sichtbaren Unterseiten von benachbarten Deckenplatten können zwischenraumfrei aneinanderstossend angeordnet werden, da keine Zwischenräume für die Durchführung von Aufhängebeschlägen freigelassen werden müssen. Mit den erfindungsgemässen Abdeckelementen kann somit eine im wesentlichen auf der ganzen sichtbaren Fläche gleichmässig leuchtende untergehängte Lichtdecke geschaffen werden.

Vorzugsweise ist die Abdeckplatte mittels der vorstehenden Folienpartie mit einem Aufhängeteil verbunden, das zwei weitere Glasscheiben umfasst, welche durch diese Folienpartie zu einem weiteren Verbundglas verbunden sind. Somit umfasst das Abdeckelement ein erstes Verbundglas in Form der Abdeckplatte und ein zweites Verbundglas in Form des Aufhängeteils, wobei die beiden Verbundgläser mittels einer durchgehenden, zusammenhängenden Verbundglasfolie miteinander verbunden sind. Das erste Verbundglas bzw. die Abdeckplatte dient als Deckenplatte, während das zweite Verbundglas bzw. das Aufhängeteil zum Aufhängen der Deckenplatte an eine Halte- oder Tragkonstruktion für die untergehängte Decke dient. Aus Sicherheits- und Festigkeitsgründen sind bevorzugterweise sowohl die Glasscheiben der Abdeckplatte als auch die Glasscheiben des Aufhängeteils aus vorgespanntem Einscheibensicherheitsglas gefertigt. Indem sowohl die Abdeckplatte als auch das Aufhängeteil aus Verbundglas ausgebildet sind, wird eine besonders einfache Herstellung des Abdeckelementes ermöglicht. Zudem ist das Aufhängeteil eines solchen Abdeckelementes durchsichtig und erzeugt somit keine störenden Schatten auf der Abdeckplatte.

Anstelle von Aufhängeteilen aus Verbundglas sind auch andere Arten von Aufhängeteilen möglich. So kann die Folie selbst an einer Haltevorrichtung wie einer Wand oder Decke, z.B. durch Kleben, befestigt werden. Zur Befestigung an eine Haltevorrichtung kann die Folie auch mit Ösen versehen werden, um ein Aufhängen der Folie an die Haltevorrichtung zu ermöglichen. Als Alternative kann die Folie auch mit einem randseitigen Saum versehen sein, um sie mittels eines Saumrohres mit der Haltevorrichtung zu verbinden.

Vorzugsweise steht bei einem Abdeckelement mit einem Aufhängeteil aus Verbundglas die vorstehende Folienpartie entlang eines geradlinigen Randes einer der Glasscheiben der Abdeckplatte vor und ist entlang dieses Randes knickbar, um die Abdeckplatte mit dem Aufhängeteil nach Art eines winkelförmig geknickten Verbindungselementes zu verbinden. Dadurch können die Abdeckplatte und das Aufhängeteil bezüglich einander unter einem Winkel, vorzugsweise unter einem Winkel zwischen 45 Grad und 135 Grad, insbesondere unter einem im Wesentlichen rechten Winkel, angeordnet werden.

Weiter kann bei einem Abdeckelement mit einem winkelförmig geknickten Verbindungselement zum Verbinden der Abdeckplatte mit dem Aufhängeteil die auf der Sichtseite der Abdeckplatte angeordnete Glasscheibe über das winkelförmige Verbindungselement hinaus vorstehen, damit bei einer mit einer Vielzahl von solchen Abdeckelementen versehenen Fläche benachbarte Abdeckplatten ohne Zwischenraum aneinanderstossend angeordnet werden können.

Vorzugsweise ist ein Abdeckelement mit einem ersten Aufhängeteil aus Verbundglas mit einem weiteren Aufhängeteil versehen, das mittels einer weiteren entlang eines geradlinigen Randes einer Glasscheibe der Abdeckplatte vorstehenden Folienpartie mit der Abdeckplatte verbunden ist und zwei weitere Glasscheiben umfasst, welche durch diese weitere Folienpartie zu einem weiteren Verbundglas verbunden sind. Das Abdeckelement umfasst somit insgesamt sechs Glasscheiben der Abdeckplatte und der beiden Aufhängeteile, welche durch eine einzige zusammenhängende Verbundglasfolie miteinander verbunden sind. Durch das weitere Aufhängeteil wird ein zweiseitiges Aufhängen des Abdeckelementes ermöglicht.

Bei einer weiteren bevorzugten Ausführungsform eines erfindungsgemässen Abdeckelementes mit einem Aufhängeteil aus Verbundglas steht die vorstehende Partie der Verbundglasfolie, welche dieses Aufhängeteil mit der Abdeckplatte verbindet, entlang eines geradlinigen Randes einer der Glasscheiben der Abdeckplatte vor und bildet entlang dieses Randes ein Verbindungselement in Form eines Schwenkgelenks nach Art eines Scharniers. Dadurch ist das Aufhängeteil um die Scharnierachse schwenkbar mit der Abdeckplatte verbunden. Selbstverständlich ist die Verbundglasfolie flexibel, wie dies bei Folien im allgemeinen der Fall ist. So kann es sich bei der Verbundglasfolie für ein erfindungsgemässes Abdeckelement insbesondere um eine zum Zusammenlaminieren von Verbundgläsem gebräuchliche Folie aus PVB (Polyvinylbutyral) handeln.

Bei einem Abdeckelement mit einem scharniergelenkartig mit der Abdeckplatte verbundenen Aufhängeteil können die an das Scharnier angrenzenden Ränder der auf einer ersten Seite der Verbundglasfolie angeordneten Glasscheiben der Abdeckplatte und des Aufhängeteils je mit einer Gehrung (Schrägschnitt) versehen sein, deren Winkel derart bemessen sind, dass die Abdeckplatte und das Aufhängeteil bezüglich einander von einer koplanaren Anordnung aus um mehr als neunzig Grad um die Scharnierachse herum schwenkbar sind. Dadurch können für den Transport der Abdeckelemente die Abdeckplatte und das Aufhängeteil in einer Ebene angeordnet werden, um sie platzsparend wie normale Verbundglasplatten transportieren zu können. Für die Montage können die Aufhängeteile um über 90 Grad geschwenkt werden, um sie z.B. in ein hakenähnliches Element einer Haltevorrichtung einhängen zu können, worauf die Aufhängeteile nach der Montage der Abdeckelemente vorzugsweise rechtwinklig zur Ebene der Abdeckplatte angeordnet werden können.

Vorzugsweise sind bei einem Abdeckelement mit zwei aus Verbundglas gefertigten Aufhängeteilen diese beiden Aufhängeteile je um eine Scharnierachse schwenkbar nach Art von Schwenkflügeln an der Abdeckplatte angelenkt bzw. mit der Abdeckplatte verbunden, wobei die beiden Scharnierachsen zueinander parallel sind.

Gemäss einer weiteren bevorzugten Ausführungsart der Erfindung ist bei einem Abdeckelement mit einem Aufhängeteil aus Verbundglas wenigstens eine Glasscheibe des Aufhängeteils fest mit einer der Glasscheiben der Abdeckplatte verbunden, um eine zusätzliche Verbindung zwischen diesem Aufhängeteil und der Abdeckplatte zu schaffen. Das Aufhängeteil ist somit zweifach mit der Abdeckplatte verbunden, nämlich einmal durch die feste Verklebung und einmal durch die Verbundglasfolie. Durch diese zweifache Verbindung wird eine doppelte Sicherheit für die aus solchen Abdeckelementen zusammengesetzte Lichtdecke erreicht. Falls einmal eine Verklebung zwischen einem Aufhängeteil und einer Abdeckplatte versagen sollte, bleibt die Abdeckplatte immer noch über das durch die Verbundglasfolie gebildete Verbindungselement mit dem Aufhängeteil verbunden.

Vorzugsweise ist das fest mit der Abdeckplatte verbundene Aufhängeteil mit einer schlitzförmigen Ausnehmung versehen, die zum Aufhängen des Abdeckelementes an einer mit einem Elementhalter versehenen Haltevorrichtung ausgebildet ist. Ein zum Halten eines solchen Abdeckelementes geeigneter Elementhalter kann eine an einer Haltevorrichtung anbringbare Zugstange aufweisen und einen exzentrisch an dieser angebrachten flachen Auflageteller. Der Auflageteller ist vorzugsweise um eine durch die Zugstange definierte Drehachse wahlweise in eine erste Position drehbar ist, in welcher er in die im Aufhängeteil ausgebildete schlitzförmige Ausnehmung eingreift, um das Abdeckelement zu halten, und in eine zweite Position, in welcher er aus der schlitzförmigen Ausnehmung entfernt ist, um das Abdeckelement freizugeben. Durch die Aufhängeeinrichtung, welche aus den in den Aufhängeteilen ausgebildeten schlitzförmigen Durchgängen und den Elementhaltern besteht, wird die Möglichkeit geschaffen, Abdeckelemente mit fest und unverschwenkbar mit den Abdeckplatten verbundenen Aufhängeteilen einzeln in eine mit solchen Abdeckelementen versehene Lichtdecke einzusetzen bzw. aus dieser zu entfernen.

Ein erfindungsgemässes Abdeckelement kann für eine untergehängte Lichtdecke verwendet werden. Es versteht sich von selbst, dass eine oder mehrere Glasscheiben eines erfindungsgemässen Abdeckelementes, insbesondere die an der Sichtseite der Abdeckplatte angeordnete Glasscheibe, in für Lichtdecken üblicher Art mit einem Durchsichtsschutz in Form eines Opalüberfangs, eines Siebdruckes und/oder einer Oberflächenätzung versehen sein können.

Zur Herstellung eines erfindungsgemässen Abdeckelementes mit einer Abdeckplatte und einem Aufhängeteil aus Verbundglas werden in einem Autoklav die Glasscheiben der Abdeckplatte und die Glasscheiben des Aufhängeteils in einem gemeinsamen Laminierprozess zu Verbundgläsern zusammenlaminiert. Vorzugsweise werden nach dem Durchgang des Abdeckelementes durch den Autoklav hindurch und vor dem vollständigen Abkühlen des Abdeckelementes die Abdeckplatte und das Aufhängeteil bezüglich einander verschwenkt, um die Verbundglasfolie teilweise von den zusammenlaminierten Glasscheiben zu lösen und dadurch ein schwenkbares Scharniergelenk zwischen der Abdeckplatte und dem Aufhängeteil zu schaffen. Anschliessend können eine Glasscheibe des Aufhängeteils mit einer Glasscheibe der Abdeckplatte verklebt werden, um eine feste, unverschwenkbare Verbindung zwischen dem Aufhängeteil und der Abdeckplatte zu schaffen.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung der Ausführungsbeispiele verwendeten Zeichnungen zeigen:
- Fig. 1: ein Abdeckelement gemäss einer ersten bevorzugten Ausführungsart der Erfindung in einer vereinfachten, geschnittenen Seitenansicht;
- Fig. 2: einen Ausschnitt aus einer untergehängten Lichtdecke mit dem Abdeckelement aus Fig. 1 in einer vereinfachten, geschnittenen Seitenansicht;
- Fig. 3: einen Ausschnitt aus einer untergehängten Lichtdecke mit einem Abdeckelement gemäss einer weiteren bevorzugten Ausführungsart der Erfindung in einer der Fig. 2 entsprechenden vereinfachten, geschnittenen Seitenansicht;
- Fig. 4: einen Ausschnitt aus der in Fig. 3 dargestellten Lichtdecke in einer teilweise entlang der Linie A-A geschnittenen Ansicht von unten.

Grundsätzlich sind in den Figuren gleiche Teile mit gleichen Bezugszeichen versehen.

### Wege zur Ausführung der Erfindung

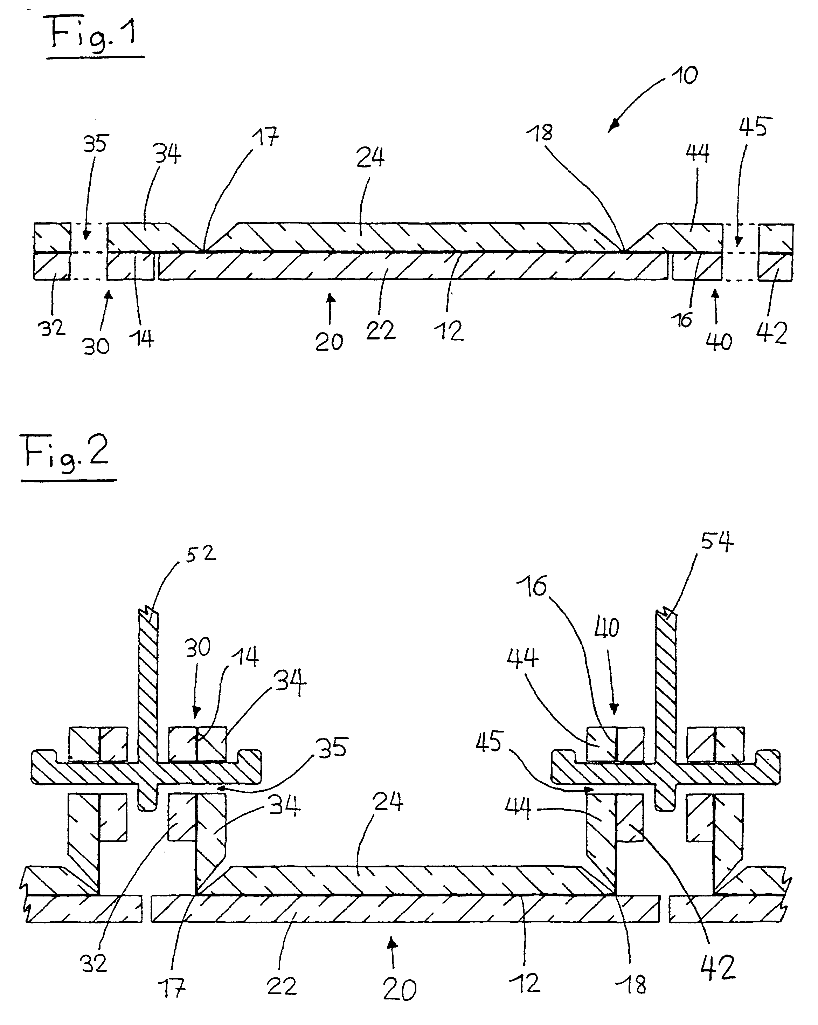

In Fig. 1 ist ein Abdeckelement 10 gemäss einer bevorzugten Ausführungsart der Erfindung in einer vereinfachten geschnittenen Seitenansicht dargestellt. Das Abdeckelement 10 ist zur Verwendung für eine untergehängte Lichtdecke vorgesehen. In Fig. 2 ist dieses Abdeckelement 10 dargestellt, wie es nach der Montage in einer untergehängten Lichtdecke angeordnet ist.

Das in den Figuren 1 und 2 dargestellte Abdeckelement 10 weist eine ebene Abdeckplatte 20 auf, die als Deckenplatte 20 für die Lichtdecke dient. Die im wesentlichen rechteckige Deckenplatte 20 besteht aus zwei durch eine aus PVB (Polyvinylbutyral) gefertigte Verbundglasfolie 12 zu einem Verbundglas verbundenen Glasscheiben 22, 24, wobei nach der Montage des Abdeckelementes 10 die untere Glasscheibe 22 an der Sichtseite und die obere Glasscheibe 24 an der verdeckten Seite der Lichtdecke angeordnet sind. Die Glasscheiben 22, 24 sind bei dem in den Figuren dargestellten Ausführungsbeispiel der Erfindung aus gleich dicken vorgespannten Einscheibensicherheitsgläsern gefertigt.

Zur Definition der verschiedenen Seiten der im wesentlichen quaderförmigen Glasscheiben werden die durch die Länge und die Breite aufgespannten Flächen als Hauptseiten, die durch die Länge und die Dicke aufgespannten Flächen als Längsseiten (bzw. als längsseitige Ränder) und die durch die Breite und die Dicke aufgespannten Flächen als Stirnseiten (bzw. als stimseitige Ränder) bezeichnet.

Die untere Glasscheibe 22 der Deckenplatte 20 ist breiter als die obere 24. Die beiden Glasscheiben 22, 24 sind entlang von zwei einander zugewandten Hauptseiten mittels der dazwischliegenden Verbundglasfolie 12 derart zusammenlaminiert, dass die Längsseiten der unteren Glasscheibe 22 auf beiden Seiten um die gleiche Distanz über die Längsseiten der oberen Glasscheibe 24 vorstehen, wobei diese Distanz grösser ist als die Dicke der Glasscheiben 22, 24, 32, 34, 42, 44. Die Verbundglasfolie 12 steht auf beiden Seiten der Deckenplatte 20 jeweils entlang der ganzen längsseitigen Ränder der Deckenplatte 20 über diese hinaus vor (d.h., sie steht beidseitig sowohl über die Längsseiten der oberen Glasscheibe 24 als auch über die Längsseiten der unteren Glasscheibe 22 hinaus vor).

Mittels der über die längsseitigen Ränder der Deckenplatte 20 vorstehenden Folienpartien 14, 16 sind beidseitig je zwei weitere im wesentlichen rechteckige Einscheibensicherheitsgläser 32, 34, 42, 44 zu Verbundgläsern 30, 40 zusammenlaminiert. Die beiden seitlichen Verbundgläser 30, 40 dienen als Halte- bzw. Aufhängeteile 30, 40 zum Aufhängen der Deckenplatte 20 an eine Halte- oder Tragkonstruktion für die Lichtdecke. Sie sind über die durchgehende Verbundglasfolie 12, 14, 16 mit der Deckenplatte 20 verbunden. Die über die längsseitigen Ränder der Deckenplatte 20 vorstehenden Folienpartien 14, 16 dienen als Verbindungselemente zur Verbindung der Deckenplatte 20 mit den Aufhängeteilen 30 bzw. 40. Die Dicke der Verbundglasfolie 12, 14, 16 ist im Wesentlichen konstant, wobei diese Dicke derart bemessen ist, dass die Verbundglasfolie 12, 14, 16 genügend stark ist, um die Abdeckplatte 20 allein (d.h. ohne zusätzliche Verbindungselemente) mit für untergehängte Lichtdecken ausreichender Sicherheit zu tragen.

Das Abdeckelement 10 umfasst somit im wesentlichen sechs Glasscheiben 22, 24, 32, 34, 42, 44 aus vorgespanntem Einscheiben-Sicherheitsglas und eine einzige, die sechs Scheiben miteinander verbindende Verbundglasfolie 12, 14, 16. Sämtliche sechs Glasscheiben 22, 24, 32, 34, 42, 44 sind im wesentlichen rechteckig und gleich dick.

Bei der in Fig. 1 und 2 dargestellten Ausführungsart der Erfindung sind die durch die Verbundglasfolie 12, 14, 16 geschaffenen Verbindungselemente zwischen der Deckenplatte 20 und den Aufhängeteilen 30 bzw. 40 flexibel. Durch die flexible Verbundglasfolie 12, 14, 16 wird entlang der beiden längsseitigen Ränder der oberen Glasscheibe 24 der Deckenplatte 20 je ein Schwenkgelenk 17, 18 nach Art eines Scharniers zwischen der Deckenplatte 20 und dem jeweiligen Aufhängeteil 30, 40 gebildet. Die Aufhängeteile 30, 40 sind somit um die beiden parallelen Scharnierachsen 17, 18 an den längsseitigen Rändern der oberen Glasscheibe 24 der Deckenplatte 20 herum bezüglich der Deckenplatte 20 schwenkbar. Um eine Verschwenkbarkeit auch dann zu gewährleisten, wenn die durch die Scharniere 17, 18 miteinander verbundenen oberen Glasscheiben 24, 34, 44 der Deckenplatte 20 und der Aufhängeteile 30, 40 entlang der Scharnierachsen 17, 18 nahe beieinander liegen, sind die entlang der Scharniere 17, 18 verlaufenden längsseitigen Ränder der oberen Glasscheibe 24 der Deckenplatte 20 und diejenigen der oberen Glasscheiben 34, 44 der Aufhängeteile 30, 40 je mit einer Gehrung (Schrägschnitt) versehen. Die spitzen Gehrungswinkel betragen bei dem in den Figuren dargestellten Ausführungsbeispiel je ca. 35 Grad. Dadurch können die beiden plattenförmigen Aufhängeteile 30, 40 bezüglich der Deckenplatte 20 von einer koplanaren Anordnung aus je um ca. 110 Grad nach oben und innen geschwenkt werden.

In Fig. 1 ist das Abdeckelement 10 in einer Anordnung dargestellt, in welcher die beiden Aufhängeteile 30, 40 im wesentlichen in der gleichen Ebene liegen wie die Deckenplatte 20. In dieser Anordnung durchläuft das Abdeckelement 10 bei dessen Herstellung den Autoklaven. Des weiteren wird diese Anordnung für den Transport des Abdeckelementes 10 bevorzugt, da sich dann das Abdeckelement 10 platzsparend, gleich wie eine Glasplatte, transportieren lässt.

In Fig. 2 ist das Abdeckelement 10 in einer Anordnung dargestellt, die es nach der Montage als Teil einer untergehängten Lichtdecke einnimmt. Die Deckenplatte 20 ist im wesentlichen horizontal und die beiden Aufhängeteile 30, 40 ungefähr rechtwinklig zur Deckenplatte 20 angeordnet, so dass sie sich von der Deckenplatte 20 im wesentlichen vertikal nach oben erstrecken. In dieser Anordnung haben die beiden Scharniergelenke 17, 18 (bzw. die entlang den längsseitigen Rändern der oberen Glasscheibe 24 der Deckenplatte 20 rechtwinklig geknickte Verbundglasfolie 12, 14, 16) die Funktion von zwei Verbindungselementen nach Art von Verbindungswinkeln, welche die Abdeckplatte 20 mit dem Aufhängeteil 30 bzw. dem Aufhängeteil 40 verbinden. Die Aufhängeteile 30, 40 sind in ihren oberen Bereichen mit Bohrungen 35, 45 versehen, welche im wesentlichen senkrecht durch die beiden Glasscheiben 32, 34, 42, 44 und die Verbundglasfolie 14, 16 der Aufhängeteile 30, 40 hindurch führen. Die Aufhängeteile 30, 40 sind mittels dieser Bohrungen 35, 45 in Aufhängehaken 52, 54 einhängbar, die fest an einer tragenden Decke angebracht sind, welche mit einer das Abdeckelement 10 umfassenden Lichtdecke versehen ist. Zum Aufhängen des Abdeckelementes 10 werden die beiden plattenförmigen Aufhängeteile 30, 40 bezüglich der Deckenplatte 20 maximal nach oben und innen geschwenkt. Dann wird das Abdeckelement 10 nach oben geschoben, wobei die Aufhängeteile 30, 40 an den Haken 52, 54 vorbeigeführt werden, bis die Haken 52, 54 in die entsprechenden Bohrungen 35, 45 eingreifen. Anschliessend werden die Aufhängeteile 30, 40 bezüglich der Deckenplatte 20 in eine - ungefähr rechtwinklige Position zurückgeschwenkt, so dass sie sicher an den Haken 52, 54 hängen. Bei dem in den Figuren dargestellten Ausführungsbeispiel wird die Deckenplatte 20 einzig durch die Verbundglasfolie 12, 14, 16 an den beiden Aufhängeteilen 30, 40 gehalten. Die Verbundglasfolie 12, 14, 16 trägt somit das gesamte Gewicht der Deckenplatte 20.

Weil - wie weiter oben erläutert - die Längsseiten der unteren Glasscheibe 22 der Deckenplatte 20 auf beiden Seiten um eine Distanz über die Längsseiten der oberen Glasscheibe 24 derselben vorstehen, die grösser ist als die Dicke der Glasscheiben 32, 34, 42, 44 der Aufhängeteile 30, 40, können bei einer mit einer Vielzahl von Abdeckelementen 10 versehenen Lichtdecke benachbarte Abdeckplatten 20 (bzw. deren untere Glasscheiben 22) ohne Zwischenraum aneinanderstossend angeordnet werden, wie in Figur 2 zu erkennen ist.

Damit bei vollständig nach aussen geschwenkten Aufhängeteilen 30, 40 (d.h. in einer koplanaren Anordnung der Aufhängeteile 30, 40 und der Deckenplatte 20, wie sie in Fig. 1 dargestellt ist) keine grossen Zwischenräume zwischen der unteren Glasscheibe 22 der Deckenplatte 20 und der über die Verbundglasfolie 12, 14, 16 mit dieser verbundenen unteren Glasscheiben 32, 42 der Aufhängeteile 30, 40 entstehen, sind die unteren Glasscheiben 32, 42 der Aufhängeteile 30, 40 gegenüber den oberen Glasscheiben 34, 44 der Aufhängeteile 30, 40 im wesentlichen um die gleiche Distanz zurückversetzt, wie die oben erwähnte Distanz zwischen der unteren 22 und der oberen Glasscheibe 24 der Deckenplatte 20 an deren längsseitigen Rändern.

Zur Herstellung eines Abdeckelementes 10, wie es in den Figuren 1 und 2 dargestellt ist, werden zunächst die sechs Glasscheiben 22, 24, 32, 34, 42, 44 der beiden Aufhängeteile 30, 40 und der Deckenplatte 20 sowie die Verbundglasfolie 12, 14, 16 in einer Anordnung angeordnet, wie sie in Fig. 1 dargestellt ist, wobei die obere Glasscheibe 24 der Deckenplatte 20 beidseitig und die oberen Glasscheiben 34, 44 der Aufhängeteile 30, 40 einseitig mit Gehrungen von 35 Grad versehen sind. Anschliessend durchläuft diese Anordnung in einem Autoklav einen zum Zusammenlaminieren von Verbundgläsern gebräuchlichen Laminierprozess. Dabei werden die untere 22 und die obere Glasscheibe 24 der Deckenplatte 20, die untere 32 und die obere Glasscheibe 34 des einen Aufhängeteils 30 sowie die untere 42 und die obere Glasscheibe 44 des anderen Aufhängeteils 40 zusammenlaminiert. Zudem werden in denjenigen Bereichen, wo die oberen Glasscheiben 34, 44 der Aufhängeteile 30, 40 über der unteren Glasscheibe 22 der Deckenplatte 20 liegen, mittels der Verbundglasfolie 12, 14, 16 bereichsweise die oberen Glasscheiben 34, 44 der Aufhängeteile 30, 40 mit der unteren Glasscheibe 22 der Deckenplatte 20 verbunden. Um diese unerwünschten Verbindungen zu lösen, werden unmittelbar nach dem Austritt des Abdeckelementes 10 aus dem Autoklav (d.h. vor einem vollständigen Abkühlen des Abdeckelementes 10) die Deckenplatte 20 und die beiden Aufhängeteile 30, 40 bezüglich einander verschwenkt, um die Verbundglasfolie 12, 14, 16 in den entsprechenden Bereichen von der unteren Glasscheibe 22 der Deckenplatte 20 zu lösen und dadurch die Beweglichkeit der beiden Scharniergelenke 17, 18 zu gewährleisten.

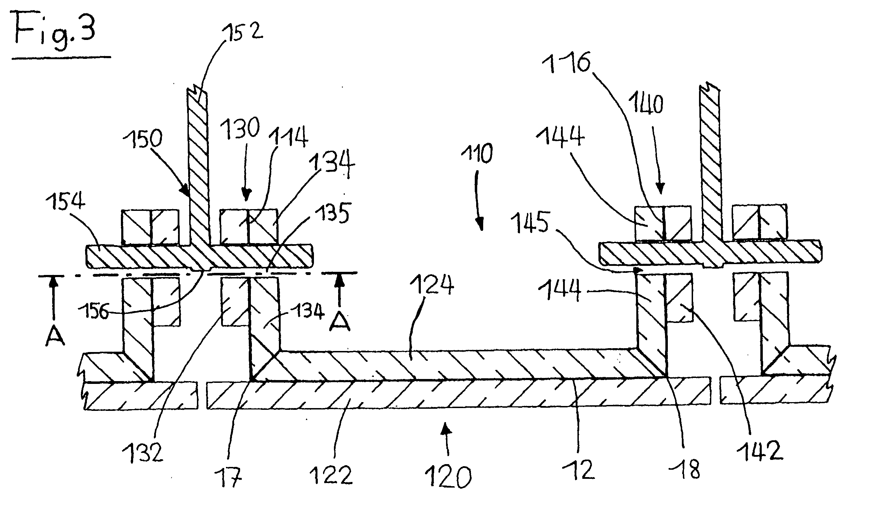

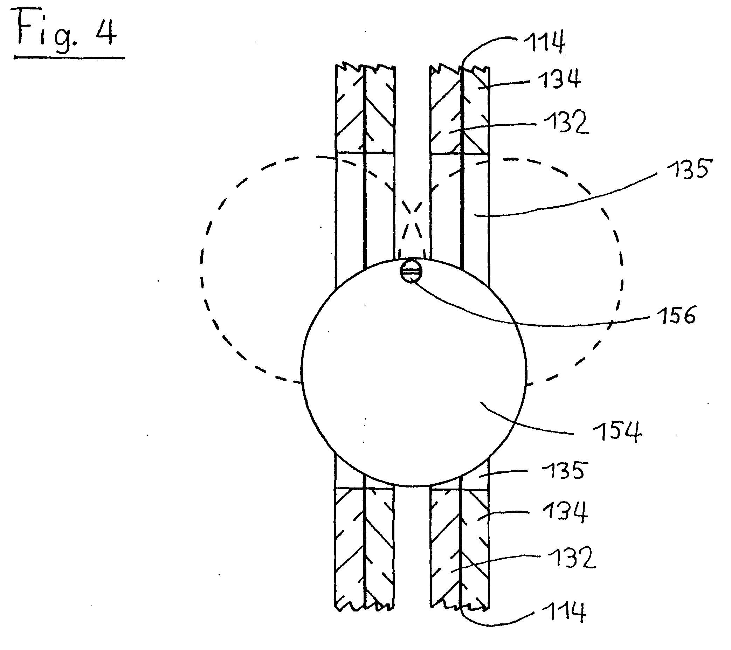

In den Figuren 3 und 4 ist ein Ausschnitt aus einer untergehängten Lichtdecke mit einem Abdeckelement 110 gemäss einer weiteren bevorzugten Ausführungsart der Erfindung dargestellt. Das in den Figuren 3 und 4 dargestellte Abdeckelement unterscheidet sich von dem in den Figuren 1 und 2 dargestellten Abdeckelement 10 einzig durch unterschiedliche Verbindungen zwischen der Abdeckplatte 120 und den beiden Aufhängeteilen 130, 140 sowie durch eine unterschiedliche Einrichtung 135, 145 zum Aufhängen der Aufhängeteile 130, 140 an einer mit einem Elementhalter 150 versehenen Haltevorrichtung für die Lichtdecke.

Das in den Figuren 3 und 4 dargestellte Abdeckelement 110 weist eine als Deckenplatte 120 für eine Lichtdecke dienende ebene Abdeckplatte 120 auf, die aus zwei durch eine Verbundglasfolie 112 zu einem Verbundglas verbundenen Glasscheiben 122, 124 besteht, wobei nach der Montage des Abdeckelementes 110 die untere Glasscheibe 122 an der Sichtseite und die obere Glasscheibe 124 an der verdeckten Seite der Lichtdecke angeordnet sind.

Die Verbundglasfolie 112 steht auf beiden Seiten über die längsseitigen Ränder der Deckenplatte 120 jeweils über die ganze Länge dieser Ränder hinaus vor. Mittels der über die längsseitigen Ränder der Deckenplatte 120 vorstehenden Folienpartien 114, 116 sind beidseitig je zwei weitere Glasscheiben 132, 134, 142, 144 zu Verbundgläsern 130, 140 zusammenlaminiert, welche als Halte- bzw. Aufhängeteile 130, 140 zum Aufhängen des Abdeckelementes 110 an eine Halte- oder Tragkonstruktion für die Lichtdecke dienen. Die im wesentlichen konstante Dicke der Verbundglasfolie 112, 114, 116 ist derart bemessen, dass die Verbundglasfolie 112, 114, 116 genügend stark ist, um die Abdeckplatte 120 allein (d.h. ohne zusätzliche Verbindungselemente) mit für untergehängte Lichtdecken ausreichender Sicherheit zu tragen. Das Abdeckelement 110 umfasst somit im Wesentlichen sechs Glasscheiben 122, 124, 132, 134, 142, 144 und eine einzige, die sechs Scheiben miteinander verbindende, durchgehende Verbundglasfolie 112, 114, 116.

Die beiden Aufhängeteile 130, 140 sind je unter einem rechten Winkel bezüglich der Deckenplatte 120 derart angeordnet, dass sie sich bezüglich dieser vertikal nach oben erstrecken. Im Unterschied zu dem in Fig. 1 und 2 dargestellten Abdeckelement 10 sind bei dem in Fig.3 und 4 dargestellten Abdeckelement 110 die beiden Aufhängeteile 130, 140 jeweils fest und unverschwenkbar mit der Deckenplatte 120 verbunden. Zu diesem Zweck ist jeweils im Bereich der beiden längsseitigen Ränder der Deckenplatte 120 eine Glasscheibe 134, 144 der Aufhängeteile 130, 140 fest mit der oberen Glasscheibe 124 der Deckenplatte 120 verklebt. Bei dem in Fig. 3 und 4 dargestellten Ausführungsbeispiel sind die miteinander verklebten Glasscheiben 124, 134, 144 an ihren Kontaktflächen je mit einer Gehrung von 45 Grad versehen. Es sind jedoch auch andere Arten der Verklebung möglich. So können z.B. die Glasscheiben der Aufhängeteile auch mit ihren Stirnseiten auf die Glasscheibe der Deckenplatte geklebt werden.

Bei dem in Fig. 3 und 4 dargestellten Abdeckelement 110 sind die Aufhängeteile 130 und 140 somit je zweifach mit der Deckenplatte 120 verbunden, nämlich einmal durch die feste Verklebung je einer ihrer Glasscheiben 134, 144 mit der oberen Glasscheibe 124 der Deckenplatte 120, und einmal durch die entlang der längsseitigen Ränder dieser oberen Glasscheibe 124 rechtwinklig geknickte Verbundglasfolie 112, 114, 116, welche im Bereich dieser Ränder je ein Verbindungselement nach Art eines Verbindungswinkels 117, 118 bildet. Durch diese zweifache Verbindung wird eine doppelte Sicherheit für die aus solchen Abdeckelementen zusammengesetzte Lichtdecke erreicht. Falls einmal eine Verklebung zwischen einem Aufhängeteil 130, 140 und einer Deckenplatte 120 versagen sollte, bleibt die Deckenplatte 120 immer noch über das durch die Verbundglasfolie 112, 114, 116 gebildete Verbindungselement 117, 118 mit dem Aufhängeteil 130, 140 verbunden.

Zum Montieren des in Fig. 3 und 4 dargestellten Abdeckelementes 110 als Teil einer untergehängten Lichtdecke sind die Aufhängeteile 130, 140 in ihrem oberen Bereich mit horizontal verlaufenden, schlitzförmigen Ausnehmungen bzw. Durchgängen 135, 145 versehen. Zum Aufhängen des Abdeckelementes 110 an einer mit der Lichtdecke versehenen Decke sind in diese schlitzförmigen Durchgänge 135, 145 flache, scheibenförmige Auflageteller 154 von Elementhaltern 150 einführbar, von denen einer beispielhaft in Fig. 3 und 4 dargestellt ist.

Der in Fig. 3 und 4 dargestellte Elementhalter 150 umfasst eine vertikale Zugstange 152. Deren oberes Ende (nicht dargestellt) ist um die durch die Mittellinie der Stange 152 definierte Drehachse drehbar an einer tragenden Decke (nicht dargestellt) angebracht, welche mit einer das Abdeckelement 110 umfassenden Lichtdecke versehen ist. Am unteren Ende der Zugstange 152 ist ein flacher, kreisrunder, scheibenförmiger Auflageteller 154 fest angebracht. Der Auflageteller 154 ist horizontal angeordnet, und er ist in Bezug auf sein Zentrum exzentrisch an der Zugstange 152 angebracht. In der Verlängerung der Zugstange 152 ist an der Unterseite des Auflagetellers 154 ein mit einem Schlitz für einen Schraubenzieher versehener Vorsprung 156 ausgebildet.

Mittels eines Schraubenziehers, der von unten in diesen Schlitz eingreifen kann, kann der Elementhalter 150 wahlweise in die drei in Fig. 4 dargestellten Positionen gedreht werden. In der in Fig. 4 in ausgezogenen Linien dargestellten Position greifen zwei Hälften des Auflagetellers 154 je in einen schlitzförmigen Durchgang 135 ein, die in zwei Aufhängeteilen 130 von benachbarten, unmittelbar neben dem Elementhalter 150 angeordneten Abdeckelementen 110 ausgebildet sind. Dadurch sind die beiden Abdeckelemente 110 über ihre Aufhängeteile 130 am Elementhalter 150 aufgehängt. In den beiden in Fig. 4 in unterbrochenen Linien dargestellten Positionen greift jeweils der Auflageteller 154 lediglich in den schlitzförmigen Durchgang 135 des einen Aufhängeteils 130 der beiden Abdeckelemente 1-10 ein. Das andere Aufhängeteil ist dann nicht mehr am Elementhalter 150 aufgehängt und kann senkrecht nach unten aus der Lichtdecke entfernt oder senkrecht nach oben in die Lichtdecke eingesetzt werden.

Durch die Aufhängeeinrichtung, welche aus den in den Aufhängeteilen 130, 140 ausgebildeten schlitzförmigen Durchgängen 135, 145 und den Elementhaltern 150 besteht, wird die Möglichkeit geschaffen, Abdeckelemente 110 der in Fig. 3 und 4 dargestellten Art, bei der die Aufhängeteile 130, 140 fest und unverschwenkbar mit der Deckenplatte 120 verbunden sind, einzeln in eine mit solchen Abdeckelementen 110 versehene Lichtdecke einzusetzen bzw. aus dieser zu entfernen.

Das Verfahren zur Herstellung des in Fig. 3 und 4 dargestellten Abdeckelementes 110 unterscheidet sich vom Herstellungsverfahren für das in Fig. 1 und 2 dargestellte Abdeckelement 10 lediglich dadurch, das die oberen Glasscheiben mit Gehrungen von 45 Grad anstelle von Gehrungen von 35 Grad versehen sind, und dass in einem zusätzlichen, am Schluss des Verfahrens ausgeführten Verfahrensschritt je eine Glasscheibe 134, 144 der beiden Aufhängeteile 130, 140 rechtwinklig zur oberen Glasscheibe 124 der Deckenplatte 120 ausgerichtet und fest mit dieser verklebt werden.

Zusammenfassend ist festzustellen, dass durch die Erfindung ein für eine untergehängte Decke verwendbares Abdeckelement geschaffen wird, welches es ermöglicht, eine untergehängte Lichtdecke mit bloss geringfügigen Heiligkeitsunterschieden an der Unterseite der Lichtdecke herzustellen. Insbesondere sind vom Rauminnern des mit der untergehängten Lichtdecke versehenen Raumes aus keine Beschläge zum Aufhängen von Deckenplatten oder Schatten solcher Beschläge sichtbar.

## Patentansprüche

1. Abdeckelement (10; 110) für eine untergehängte Decke, mit einer Abdeckplatte (20; 120), welche zwei durch eine Verbundglasfolie (12, 14, 16; 112, 114, 116) zu einem Verbundglas verbundene Glasscheiben (22, 24; 122, 124) umfasst, **dadurch gekennzeichnet, dass** die Verbundglasfolie (12, 14, 16; 112, 114, 116) eine über einen Rand einer der beiden Glasscheiben (22, 24; 122, 124) vorstehende Partie (14; 114) aufweist, die zum Aufhängen der Abdeckplatte (20; 120) an einer Haltevorrichtung bemessen ist.

2. Abdeckelement (10; 110) nach Anspruch 1, **gekennzeichnet durch** ein mittels der vorstehenden Folienpartie (14; 114) verbundenes Aufhängeteil (30; 130), das zwei weitere Glasscheiben (32, 34; 132, 134) umfasst, welche **durch** diese Folienpartie (14; 114) zu einem weiteren Verbundglas verbunden sind.

3. Abdeckelement (10; 110) nach Anspruch 2, **dadurch gekennzeichnet, dass** die vorstehende Partie (14; 114) der Verbundglasfolie entlang eines geradlinigen Randes einer der Glasscheiben (22, 24; 122, 124) der Abdeckplatte (20; 120) vorsteht und entlang dieses Randes knickbar ist, um die Abdeckplatte (20; 120) mit dem Aufhängeteil (30; 130) nach Art eines winkelförmig geknickten Verbindungselementes (17; 117) verbinden zu können, wobei die Abdeckplatte (20; 120) und das Aufhängeteil (30; 130) bezüglich einander vorzugsweise unter einem Winkel zwischen 45 Grad und 135 Grad, insbesondere einem im Wesentlichen rechten Winkel angeordnet werden können.

4. Abdeckelement (10) nach Anspruch 3, **dadurch gekennzeichnet, dass** die auf der Sichtseite der Abdeckplatte (20; 120) angeordnete Glasscheibe (22; 122) überdas durch die Verbundglasfolie (12, 14, 16; 112, 114, 116) gebildete winkelförmig knickbare Verbindungselement (17; 117) hinaus vorsteht, damit bei einer mit einer Vielzahl von Abdeckelementen (10; 110) versehenen Decke benachbarte Abdeckplatten (20) zwischenraumfrei aneinanderstossend angeordnet werden können.

5. Abdeckelement (10; 110) nach einem der Ansprüche 2 oder 3, **gekennzeichnet durch** ein weiteres Aufhängeteil (40; 140), das mittels einer weiteren entlang eines geradlinigen Randes einer Glasscheibe (22, 24; 122, 124) der Abdeckplatte (20; 120) vorstehenden Folienpartie (16; 116) mit der Abdeckplatte (20; 120) verbunden ist und zwei weitere Glasscheiben (42, 44; 142, 144) umfasst, welche **durch** diese weitere Folienpartie (16; 116) zu einem weiteren Verbundglas verbunden sind, wobei die insgesamt sechs Glasscheiben (22, 24, 32, 34, 42, 44; 122, 124, 132, 134, 142, 144) der Abdeckplatte (20; 120) und der beiden Aufhängeteile (30, 40; 130, 140) **durch** eine einzige zusammenhängende Verbundglasfolie (12, 14, 16; 112, 114, 116) miteinander verbunden sind.

6. Abdeckelement (10) nach einem der Ansprüche 3 bis 5, **dadurch gekennzeichnet, dass** wenigstens eine vorstehende Partie (14) der Verbundglasfolie entlang des einen geradlinigen Randes einer der Glasscheiben (22, 24) der Abdeckplatte (20) ein Verbindungselement in Form eines Schwenkgelenks (17) nach Art eines Scharniers (17) bildet, um das Aufhängeteil (30) um die Scharnierachse (17) schwenkbar mit der Abdeckplatte (20) zu verbinden.

7. Abdeckelement (10) nach Anspruch 6, **dadurch gekennzeichnet, dass** die an das Scharnier (17) angrenzenden Ränder der auf einer ersten Seite der Verbundglasfolie (12, 14, 16) angeordneten Glasscheiben (24, 34) der Abdeckplatte (20) und des Aufhängeteils (30) je mit einer Gehrung versehen sind, deren Winkel derart bemessen sind, dass die Abdeckplatte (20) und das Aufhängeteil (30) bezüglich einander von einer koplanaren Anordnung aus um mehr als neunzig Grad um die Scharnierachse (17) schwenkbar sind.

8. Abdeckelement (10) nach Anspruch 5 und einem der Ansprüche 6 oder7, **dadurch gekennzeichnet, dass** die beiden vorstehenden Partien (14, 16) der Verbundglasfolie je ein Schwenkgelenk (17, 18) nach Art eines Scharniers (17, 18) bilden, um die beiden Aufhängeteile (30, 40) je um eine Scharnierachse (17, 18) schwenkbar nach Art von Schwenkflügeln an der Abdeckplatte (20) anzulenken, wobei die beiden Scharnierachsen (17, 18) zueinander parallel sind.

9. Abdeckelement (110) nach einem der Ansprüche 3 bis 5, **dadurch gekennzeichnet, dass** wenigstens eine Glasscheibe (134) eines Aufhängeteils (130) fest mit einer der Glasscheiben (124) der Abdeckplatte (120) verbunden ist, um eine zusätzliche Verbindung zwischen diesem Aufhängeteil (130) und der Abdeckplatte (120) zu schaffen.

10. Abdeckelement (110) nach Anspruch 9, **dadurch gekennzeichnet, dass** das fest mit der Abdeckplatte (120) verbundene Aufhängeteil (130) mit einer schlitzförmigen Ausnehmung (135) versehen ist, die zum Aufhängen des Abdeckelementes an einer mit einem Elementhalter (150) versehenen Haltevorrichtung ausgebildet ist.

11. Verfahren zur Herstellung eines Abdeckelementes (10, 110) nach einem der Ansprüche 2 bis 10, **dadurch gekennzeichnet, dass** in einem Autoklav die Glasscheiben (22, 24) der Abdeckplatte (20) und die Glasscheiben (32, 34) des Aufhängeteils (30) in einem gemeinsamen Laminierprozess zu Verbundgläsern zusammenlaminiert werden.

12. Verfahren nach Anspruch 11, **dadurch gekennzeichnet, dass** nach dem Durchgang des Abdeckelementes (10; 110) durch den Autoklaven hindurch und vor dem vollständigen Abkühlen des Abdeckelementes (10; 110) die Abdeckplatte (20; 120) und das Aufhängeteil (30; 130) bezüglich einander verschwenkt werden, um ein teilweises Lösen der Verbundglasfolie (12, 14, 16; 112, 114, 116) von den zusammenlaminierten Glasscheiben (22, 24, 32, 34; 122, 124, 132, 134) zu bewirken und dadurch ein schwenkbares Scharniergelenk (17; 117) zwischen der Abdeckplatte (20; 120) und dem Aufhängeteil (30; 130) zu schaffen.

13. Verfahren nach Anspruch 12, **dadurch gekennzeichnet, dass** nach der Schaffung eines schwenkbaren Scharniergelenks (117) eine Glasscheibe (134) des Aufhängeteils (130) mit einer Glasscheibe (124) der Abdeckplatte (120) verklebt werden, um eine feste, unverschwenkbare Verbindung zwischen dem Aufhängeteil (130) und der Abdeckplatte (120) zu schaffen.

## Claims

1. Covering element (10; 110) for a suspended ceiling, with a covering panel (20; 120) which comprises two glass panes (22, 24; 122, 124) which are connected by a composite glass sheet (12, 14, 16; 112, 114, 116) to form a composite glass, **characterised in that** the composite glass sheet (12, 14, 16; 112, 114, 116) has a part (14; 114) which protrudes beyond an edge of one of the two glass panes (22, 24; 122, 124) and is dimensioned to suspend the covering panel (20; 120) from a holding device.

2. Covering element (10; 110) according to Claim 1, **characterised by** a suspension part (30; 130) which is connected by means of the protruding sheet part (14; 114) and comprises two further glass panes (32, 34; 132, 134) which are connected by this sheet part (14; 114) to form a further composite glass.

3. Covering element (10; 110) according to Claim 2, **characterised in that** the protruding part (14; 114) of the composite glass sheet protrudes along a rectilinear edge of one of the glass panes (22, 24; 122, 124) of the covering panel (20; 120) and can be bent along this edge in order that the covering panel (20; 120) can be connected to the suspension part (30; 130) in the manner of an angularly bent connecting element (17; 117), wherein the covering panel (20; 120) and the suspension part (30; 130) can be disposed relative to one another preferably at an angle of between 45 degrees and 135 degrees, in particular a substantially right angle.

4. Covering element (10) according to Claim 3, **characterised in that** the glass pane (22; 122) disposed on the visible side of the covering panel (20; 120) protrudes beyond the connecting element (17; 117), which is formed by the composite glass sheet (12, 14, 16; 112, 114, 116) and can be bent at an angle, so that, given a ceiling provided with a plurality of covering elements (10; 110), adjacent covering panels (20) can be disposed in abutting fashion without any gaps.

5. Covering element (10; 110) according to either of Claims 2 and 3, **characterised by** a further suspension part (40; 140) which is connected to the covering panel (20; 120) by means of a further sheet part (16; 116) protruding along a rectilinear edge of a glass pane (22, 24; 122, 124) of the covering panel (20; 120) and which comprises two further glass panes (42, 44; 142, 144) which are connected by this further sheet part (16; 116) to form a further composite glass, wherein the total of six glass panes (22, 24, 32, 34, 42, 44; 122, 124, 132, 134, 142, 144) of the covering panel (20; 120) and the two suspension parts (30, 40; 130, 140) are connected together by a single continuous composite glass sheet (12, 14, 16; 112, 114, 116).

6. Covering element (10) according to any one of Claims 3 to 5, **characterised in that** at least one protruding part (14) of the composite glass sheet forms along the one rectilinear edge of one of the glass panes (22, 24) of the covering panel (20) a connecting element in the form of a swivel joint (17) in the manner of a hinge (17) in order to connect the suspension part (30) to the covering panel (20) such that it can swivel about the hinge axis (17).

7. Covering element (10) according to Claim 6, **characterised in that** the edges, adjacent to the hinge (17), of the glass panes (24, 34) of the covering panel (20) and the suspension part (30) which are disposed on a first side of the composite glass sheet (12, 14, 16) are each provided with a mitre whose angles are dimensioned such that the covering panel (20) and the suspension part (30) can be swivelled relative to one another from a coplanar arrangement through more than ninety degrees about the hinge axis (17).

8. Covering element (10) according to Claim 5 and either of Claims 6 and 7, **characterised in that** the two protruding parts (14, 16) of the composite glass sheet each form a swivel joint (17, 18) in the manner of a hinge (17, 18) in order to hinge the two suspension parts (30, 40) to the covering panel (20) in the manner of tilting wings such that they can swivel about a respective hinge axis (17, 18), wherein the two hinge axes (17, 18) are parallel to one another.

9. Covering element (110) according to any one of Claims 3 to 5, **characterised in that** at least one glass pane (134) of a suspension part (130) is firmly connected to one of the glass panes (124) of the covering panel (120) in order to create an additional connection between this suspension part (130) and the covering panel (120).

10. Covering element (110) according to Claim 9, **characterised in that** the suspension part (130) which is firmly connected to the covering panel (120) is provided with a slot-shaped recess (135) which is formed to suspend the covering element from a holding device which is provided with an element holder (150).

11. Method for producing a covering element (10, 110) according to any one of Claims 2 to 10, **characterised in that** the glass panes (22, 24) of the covering panel (20) and the glass panes (32, 34) of the suspension part (30) are laminated together in an autoclave in a common laminating process to form composite glasses.

12. Method according to Claim 11, **characterised in that**, after passing the covering element (10; 110) through the autoclave and before completely cooling the covering element (10; 110), the covering panel (20; 120) and the suspension part (30; 130) are swivelled relative to one another in order to partially detach the composite glass sheet (12, 14, 16; 112, 114, 116) from the laminated glass panes (22, 24, 32, 34; 122, 124, 132, 134) and thereby create a swivelling hinge joint (17; 117) between the covering panel (20; 120) and the suspension part (30; 130).

13. Method according to Claim 12, **characterised in that**, after creating a swivelling hinge joint (117), a glass pane (134) of the suspension part (130) is stuck to a glass pane (124) of the covering panel (120) in order to create a firm, non-swivelling connection between the suspension part (130) and the covering panel (120).

## Revendications

1. Elément de couverture (10 ; 110) pour un faux plafond, avec un panneau de couverture (20 ; 120) qui comprend deux vitres (22, 24 ; 122, 124) reliées par une feuille en verre feuilleté (12, 14, 16 ; 112, 114, 116) pour former un verre feuilleté, **caractérisé en ce que** la feuille en verre feuilleté (12, 14, 16 ; 112, 114, 116) comporte une partie (14 ; 114) en saillie au dessus d'un bord de l'une des deux vitres (22, 24 ; 122, 124), la partie (14 ; 114) en saillie étant dimensionnée pour suspendre le panneau de couverture (20 ; 120) à un dispositif de fixation.

2. Elément de couverture (10 ; 110) selon la revendication 1, **caractérisé par** une partie de suspension (30 ; 130) reliée à l'aide de la partie de feuille en saillie (14 ; 114), la partie de suspension (30 ; 130) comprenant deux autres vitres (32, 34 ; 132, 134) qui sont reliées par cette partie de feuille ((14 ; 114) pour former un autre verre feuilleté.

3. Elément de couverture (10 ; 110) selon la revendication 2, **caractérisé en ce que** la partie en saillie (14 ; 114) de la feuille en verre feuilleté fait saillie le long d'un bord rectiligne de l'une des vitres (22, 24 ; 122, 124) du panneau de couverture (20 ; 120) et peut être pliée le long de ce bord pour pouvoir raccorder le panneau de couverture (20 ; 120) à la partie de suspension (30 ; 130) à la manière d'un élément de liaison (17 ; 117) plié en forme d'angle, le panneau de couverture (20 ; 120) et la partie de suspension (30 ; 130) pouvant être disposés l'un par rapport à l'autre, de préférence, selon un angle compris entre 45 degrés et 135 degrés, en particulier un angle sensiblement droit.

4. Elément de couverture (10 ; 110) selon la revendication 3, **caractérisé en ce que** la vitre (22 ; 122) disposée sur le côté visible du panneau de couverture (20 ; 120) fait saillie au dessus de l'élément de liaison (17 ; 117) pliable en forme d'angle, formé par la feuille en verre feuilleté (12, 14, 16 ; 112, 114, 116), pour pouvoir placer des panneaux de couverture voisins (20) de manière contiguë sans interstice, dans le cas d'un plafond muni d'une pluralité d'éléments de couverture (10 ; 110).

5. Elément de couverture (10 ; 110) selon l'une quelconque des revendications 2 ou 3, **caractérisé par** une autre partie de suspension (40 ; 140) qui est reliée au panneau de couverture (20 ; 120) à l'aide d'une autre partie de feuille (16 ; 116) en saillie le long d'un bord rectiligne d'une vitre (22, 24 ; 122, 124) du panneau de couverture (20 ; 120) et qui comprend deux autres vitres (42, 44 ; 142, 144) qui sont reliées par cette autre partie de feuille (16 ; 116) pour former un autre verre feuilleté, les, au total, six vitres (22, 24, 32, 34, 42, 44 ; 122, 124, 132, 134, 142, 144) du panneau de couverture (20 ; 120) et des deux parties de suspension (30, 40 ; 130, 140) étant reliées les unes aux autres par une seule feuille en verre feuilleté (12, 14, 16 ; 112, 114, 116) continue.

6. Elément de couverture (10 ; 110) selon l'une quelconque des revendications 3 à 5, **caractérisé en ce qu'**au moins une partie en saillie (14) de la feuille en verre feuilleté le long du bord rectiligne de la vitre (22, 24) du panneau de couverture (20) forme un élément de liaison sous forme d'une articulation pivotante (17) à la manière d'une charnière (17) pour relier la partie de suspension (30) au panneau de couverture (20) de manière pivotante autour de l'axe de la charnière (17).

7. Elément de couverture (10 ; 110) selon la revendication 6, **caractérisé en ce que** les bords adjacents à la charnière (17) des vitres (24, 34) du panneau de couverture et de la partie de suspension disposées sur une première face de la feuille en verre feuilleté (12, 14, 16) sont munis chacun d'un onglet dont les angles sont dimensionnés de telle manière que le panneau de couverture (20) et la partie de suspension (30) peuvent pivoter l'un par rapport à l'autre à partir d'un agencement coplanaire sur plus de quatre vingt dix degrés autour de l'axe de la charnière (17).

8. Elément de couverture (10 ; 110) selon la revendication 5 et l'une quelconque des revendications 6 ou 7, **caractérisé en ce que** les deux parties en saillie (14, 16) de la feuille en verre feuilleté forment chacune une articulation pivotante (17, 18) à la manière d'une charnière (17, 18) pour articuler chacune des deux parties de suspension (30, 40) sur le panneau de couverture (20) de manière pivotante autour d'un axe de charnière (17, 18) à la manière de battants pivotants, les deux axes de charnière (17, 18) étant parallèles.

9. Elément de couverture (10 ; 110) selon l'une quelconque des revendications 3 à 5, **caractérisé en ce qu'**au moins une vitre (134) d'une partie de suspension (130) est reliée fixement à l'une de vitres (124) du panneau de couverture (120) pour établir une liaison supplémentaire entre cette partie de suspension (130) et le panneau de couverture (120).

10. Elément de couverture (10 ; 110) selon la revendication 9, **caractérisé en ce que** la partie de suspension (130) reliée fixement au panneau de couverture (120) est munie d'un creux en forme de fente (135) qui est configurée pour la suspension de l'élément de couverture à un dispositif de fixation muni d'un porte-élément (150).

11. Procédé pour la fabrication d'un élément de couverture (10 ; 110) selon l'une quelconque des revendications 2 à 10, **caractérisé en ce que** les vitres (22, 24) du panneau de couverture (20) et les vitres (32, 34) de la partie de suspension (30) sont stratifiées ensemble dans un autoclave selon un processus de stratification commun pour former des verres feuilletés.

12. Procédé selon la revendication 11, **caractérisé en ce que**, après le passage de l'élément de couverture (10 ; 110) dans l'autoclave et avant le refroidissement complet de l'élément de couverture (10 ; 110), on fait pivoter le panneau de couverture (20 ; 120) et la partie de suspension (30 ; 130) l'un par rapport à l'autre pour provoquer un détachement partiel de la feuille en verre feuilleté (12, 14, 16 ; 112, 114, 116) des vitres stratifiées ensemble (12, 14, 16 ; 112, 114, 116) et pour créer ainsi une articulation pivotante (17 ; 117) entre le panneau de couverture (20 ; 120) et la partie de suspension (30 ; 130).

13. Procédé selon la revendication 12, **caractérisé en ce que**, après la création d'une articulation pivotante (117), une vitre (134) de la partie de suspension (130) est collée avec une vitre (124) du panneau de couverture (120) pour établir une liaison fixe, non pivotante, entre la partie de suspension (130) et le panneau de couverture (120).
